# EUROPÄISCHE PATENTANMELDUNG

(11) **EP 2 159 208 A1**
(43) Veröffentlichungstag der Anmeldung: **03.03.2010**
(21) Anmeldenummer: 08015168.1
(22) Anmeldetag: 28.08.2008
(51) Int. Cl.: C04B 41/68, E04B 1/80, F16L 59/02

(54) **Wärmedämmkörper mit Haftvermittler**

(71) Anmelder: PROMAT GmbH, 40878 Ratingen (DE)
(72) Erfinder: Die Erfindernennung liegt noch nicht vor
(74) Vertreter: Ring & Weisbrodt

(57) **Zusammenfassung**

Die vorliegende Erfindung betrifft einen Kieselsäure- und/ oder Silicat-haltigen Wärmedämmkörper, insbesondere einen nanoporösen Wärmedämmkörper aus diesem Material, wobei der Wärmedämmkörper zumindest einseitig wenigstens teilweise mit einem Coating beschichtet ist, das eine Mischung aus zumindest einem Aluminiumphosphat mit Kieselsäure und/ oder einem Silicat enthält. Die Erfindung betrifft des Weiteren ein Verfahren zur Oberflächenbehandlung und Verklebung derartiger Wärmedämmkörper, eine Wärmeisolierung aus diesen Wärmedämmkörpern, sowie die Verwendung des Coatings als Haftvermittler für die Verklebung von Wärmedämmkörpern.

## Beschreibung

Die vorliegende Erfindung betrifft einen Kieselsäure- und/ oder Silicat-haltigen Wärmedämmkörper, insbesondere einen nanoporösen Wärmedämmkörper aus diesem Material mit einem Coating. Die Erfindung betrifft des Weiteren ein Verfahren zur Oberflächenbehandlung und Verklebung derartiger Körper miteinander oder mit anderen Materialien eine Wärmeisolierung aus diesen Körpern, sowie die Verwendung des Coatings als Haftvermittler für die Verklebung von Wärmedämmkörpern.

Silicathaltige Wärmedämmkörper sind aus dem Stand der Technik bekannt. Diese Körper können aus unterschiedlichen Rohstoffen und auf verschiedene Weisen hergestellt werden. Zur Erzielung sehr guter Isolationswirkungen, die sich über die Wärmeleitzahl (in W m⁻¹K⁻¹), ausdrücken lassen, werden Wärmedämmkörper durch Verpressen der Rohstoffe hergestellt, wobei versucht wird, auf Bindemittel weitestgehend zu verzichten. Diese Wärmedämmkörper werden häufig bei hohen Temperaturen gesintert, damit ausreichende Festigkeiten erzielt werden. Organische Bindemittel scheiden beim Einsatz in Wärmedämmkörpern wegen ihrer mangelnden Temperaturresistenz aus, wobei die Verwendung anorganischer Bindemittel die Dämmleistung reduzieren kann. Wärmedämmkörper, die lediglich durch Verpressen hergestellt werden können, sind in der Patentschrift EP 1140729 beschrieben. Derartige Wärmedämmkörper werden in erster Linie als Wärmedämmplatten eingesetzt.

Bei gepressten Wärmedämmkörpern kommen in erster Linie sehr feinteilige Rohstoffe zum Einsatz, um eine ausreichende Eigenfestigkeit durch bloßes Verpressen erzielen zu können. Die mittleren Teilchengrößen liegen bei diesen Wärmedämmkörpern in der Regel im unteren sub-Mikrometer bzw. im Nanometerbereich. Aus diesem Grunde werden diese Wärmedämmkörper auch als nanoporös bezeichnet.

Bei der Erstellung einer Wärmeisolation aus diesen nanoporösen Wärmedämmkörpern oder Wärmedämmplatten, beispielsweise für einen Kamin oder einen Kachelofen, stellt sich das Problem, diese Platten ausreichend fest mit dem Untergrund, der vor der Wärmeeinwirkung geschützt werden soll, zu verbinden. Das Einschlagen von Nägeln oder das Verschrauben wird nicht in jedem Falle als sinnvoll erachtet, da auf diese Weise Wärmeübertragungsbrücken in die Dämmung eingebracht werden. Der Brandschutz der darunter liegenden, möglicherweise brennbaren Wand, wäre dadurch gefährdet.

Die Verwendung üblicher Montagekleber für den Baubereich scheidet ebenfalls aus, da diese in der Regel auf einer organischen Bindemittelmatrix aufbauen, die keine ausreichende Temperaturbeständigkeit besitzt.

Daher werden bislang Klebesysteme auf Basis einer anorganischen Klebemittelmatrix eingesetzt, insbesondere so genannte keramische Kleber auf Wasserglasbasis. Diese besitzen zwar eine ausreichende Temperaturbeständigkeit, unterliegen während des Trocknens jedoch einem gewissen Schwund, was dazu führen kann, dass es vereinzelt nach einigen Monaten zum Lösen der Verklebung bei gepressten, nanoporösen Wärmedämmkörpern kommt.

Die Aufgabe der vorliegenden Erfindung besteht somit darin, eine Möglichkeit zu schaffen, Kieselsäure- bzw. Silicat-haltige Wärmedämmkörper, insbesondere gepresste, nanoporöse Wärmedämmkörper aus diesem Material, dauerhafter auf Untergründen befestigen zu können.

Es hat sich überraschenderweise herausgestellt, dass eine Vorbehandlung der Wärmedämmkörper mit einem speziellen Coating dazu führt, dass eine anschließende Verklebung, beispielsweise mit einem Wasserglaskleber, wesentlich dauerhafter ist und das auch bei entsprechender Temperaturbelastung. Außerdem kann das Coating für eine Versigelung der Oberfläche eingesetzt werden, die den Abrieb an diesen Wärmedämmkörpern reduziert.

Im Rahmen der Untersuchungen, die zu dieser Erfindung geführt haben, hat sich heraus gestellt, dass ein Problem bei der Verklebung von Kieselsäure- bzw. Silicat-haltigen Wärmedämmkörpern darin besteht, dass die Wärmedämmkörper in Ermangelung eines Bindemittels an der Oberfläche durch losgelöste Nanopartikel immer leicht "staubig" sind. Dies gilt auch für Wärmedämmkörper, die nur eine geringe Menge an Bindemittel aufweisen. Diese feine Schicht aus losen Nanopartikeln lässt sich zwar abwischen oder mit wenig Wasser in die Oberfläche einpinseln, bildet sich jedoch aufgrund von Abrieb schnell wieder aufs Neue. Es wurde zwar bislang angenommen, dass ein Wasserglaskleber in der Lage ist, diese Oberflächenpartikel zu binden, jedoch ist die Haltbarkeit der Verklebung nicht in jedem Falle zufrieden stellend.

Die erfindungsgemäßen Wärmedämmkörper werden jedoch vor der Verklebung, beispielsweise mit einem Wasserglaskleber, mit Hilfe eines Coatings, also einer Oberflächenbeschichtung, behandelt. Dieses Coating enthält erfindungsgemäß eine Mischung aus zumindest einem Aluminiumphosphat mit Kieselsäure und/ oder einem Silicat. Diese Mischung wirkt als Haftvermittler zwischen Wärmedämmkörper und Kleber.

Daher ist ein erster Gegenstand der vorliegenden Erfindung ein Wärmedämmkörper, der Kieselsäure und/ oder ein Silicat enthält, der erfindungsgemäß dadurch gekennzeichnet ist, dass der Wärmedämmkörper zumindest einseitig wenigstens teilweise mit einem Coating beschichtet ist, das eine Mischung aus zumindest einem Aluminiumphosphat mit Kieselsäure und/ oder einem Silicat enthält.

Der erfindungsgemäße Wärmedämmkörper kann bevorzugt als Wärmedämmplatte ausgebildet sein.

In diesem Coating können prinzipiell alle möglichen Aluminiumphosphate eingesetzt werden oder auch Mischungen von diesen, wobei jedoch Aluminiumdihydrogenphosphat, Al (H₂PO₄)₃ besonders bevorzugt ist, da sich bei dieser Verbindung die besten Haftvermittlereigenschaften zwischen dem Wärmedämmkörper und dem Klebstoff zeigen.

Das Coating kann auf verschiedene Weise aufgebracht werden. Im einfachsten Fall wird eine wässrige Lösung von Aluminiumdihydrogenphosphat, die feinteilige pyrogene Kieselsäure enthält, auf den Wärmedämmkörper aufgesprüht und dann die Schicht getrocknet. Dieser Schritt kann auch ein oder mehrmals wiederholt werden. Es ist ebenfalls möglich, das Coating mit einem Pinsel auf den Wärmedämmkörper aufzutragen.

Nach einer bevorzugten Ausführungsform des erfindungsgemäßen Wärmedämmkörpers, enthält das Coating im trocknen Zustand zwischen 20 und 95 Gew.-%, bevorzugt zwischen 30 und 90 Gew.-%, ganz besonders bevorzugt zwischen 40 und 80 Gew.-% an Aluminiumphosphat. Diese Mengen an Aluminiumphosphat sind besonders vorteilhaft, da das Coating in diesem Falle sehr gute Haftvermittlereigenschaften aufweist.

Nach einer weiteren bevorzugten Ausführungsform des erfindungsgemäßen Wärmedämmkörpers, enthält das Coating im trocknen Zustand zwischen 3 und 80 Gew.-%, bevorzugt zwischen 5 und 70 Gew.-%, ganz besonders bevorzugt zwischen 7 und 60 Gew.-% an Kieselsäure und/ oder Silicat. Diese Gehalte an an Kieselsäure und/ oder Silicat im Coating wirken sich ebenfalls positiv auf die Haftvermittlereigenschaften aus.

Die im Coating eingesetzte Kieselsäure und/ oder Silicat hat bevorzugt eine mittlere Teilchengröße von weniger als 1 µm, bevorzugt weniger als 500 nm, ganz besonders bevorzugt weniger als 100 nm.

Eine Weiterbildung der des erfindungsgemäßen Wärmedämmkörpers sieht vor, dass der Wärmedämmkörper und/ oder das Coating Kieselsäure in Form von pyrogener Kieselsäure, einschließlich Lichtbogenkieselsäuren, Siliciumdioxidaerogele, Fällungskieselsäure, insbesondere alkaliarme Fällungskieselsäuren oder Microsilica enthält. Von diesen ist pyrogene Kieselsäure bevorzugt. Unabhängig davon kann das Silicat als Calciumsilicat oder Vermiculit, insbesondere als expandierter Vermiculit vorliegen.

Im Rahmen der vorliegenden Erfindung zeichnen sich die erfindungsgemäßen Wärmedämmkörper bevorzugt dadurch aus, dass diese einen Gehalt an Kieselsäure und/ oder Silicat von wenigstens 20 Gew.-%, bevorzugt wenigstens 30 Gew.-%, ganz besonders bevorzugt wenigstens 35 Gew.-% aufweist, insbesondere von 25 bis 100 Gew.-%, bevorzugt von 30 bis 90 Gew.-%. Wärmedämmkörper mit diesen Anteilen an Kieselsäure und/ oder Silicat lassen sich in der Regel nur schwierig verkleben, haben jedoch hervorragende Isolationseigenschaften. Daher ist der Einsatz des erfindungsgemäßen Coatings für diese Wärmedämmkörper von Vorteil, um dauerhaftere Fixierung dieser Wärmedämmkörper zu ermöglichen.

Die erfindungsgemäßen Wärmedämmkörper können noch weitere Bestandteile aufweisen, wie beispielsweise Gips, Aluminiumoxid, Magnesiumoxid, Calciumoxid oder Mischungen von diesen.

Eine weitere, bevorzugte Ausführungsform des erfindungsgemäßen Wärmedämmkörpers zeichnet sich dadurch aus, dass der Wärmedämmkörper ein Trübungsmittel enthält. Diese Trübungsmittel dienen in erster Linie dazu, die Durchlässigkeit des Wärmedämmkörpers gegenüber Wärmestrahlung noch stärker zu vermindern. Trübungsmittel im Sinne der vorliegenden Erfindung sind insbesondere ausgewählt aus Siliziumcarbid, Siliciumdioxid, Zirconsilicat, Zirconoxid, Titandioxid, insbesondere als Rutil, Ilmenit, Eisenoxid, insbesondere Eisen (II)/(III)-Mischoxide, Chromdioxid, Mangandioxid, Aluminiumoxid, Ruß oder Mischungen von diesen.

Es hat sich als besonders effektiv in Bezug auf die Isolationswirkung herausgestellt, wenn der erfindungsgemäße Wärmedämmkörper Trübungsmittel in einer Menge von mehr als 0 bis zu 30 Gew.-%, bevorzugt zwischen 2 und 20 Gew.-% enthält.

Eine Weiterbindung des erfindungsgemäßen Wärmedämmkörpers sieht vor, dass der Wärmedämmkörper Strukturverstärker enthält, die insbesondere ausgewählt sind aus organischen oder anorganischen Fasermaterialien, insbesondere Glasfasern, Keramikfasern und Whiskers sowie Faserschnüren, wie sie beispielsweise aus Schmelzen von Aluminium- und/oder Siliciumoxid gewonnen werden, Steinwolle, Basaltfasern, Schlackenwolle, Erdalkalimetallfasern, HT-Glasfasern, Cellulosefasern, Polymerfasern sowie Mischungen von diesen. Bei den Polymerfasern sollten solche Fasern ausgewählt werden, die eine gewisse Temperaturresistenz zeigen, wie beispielsweise Polyamidfasern, insbesondere Aramidfasern oder Fasern aus PTFE.

Diese Strukturverstärker verleihen dem erfindungsgemäßen Wärmedämmkörper eine ausreichende Eigenstabilität und auch ein gewisses Maß an Flexibilität, damit der Körper bei Biegebelastung, insbesondere in Form einer Platte, bruchresistenter ist. Zu diesem Zweck kann der Wärmedämmkörper die Strukturverstärker in einer Menge von mehr als 0 bis zu 10 Gew.-% enthalten, bevorzugt zwischen 1 und 8 Gew.-%.

Der erfindungsgemäße Wärmedämmkörper kann auch noch weitere Zusätze enthalten, die insbesondere ausgewählt sind aus Xonotlit, Perlit und Tonerde. Diese Zusätze, insbesondere Xonotlit, können die Wärmedämmeigenschaften eines Wärmedämmkörpers, sowie insbesondere dessen Stabilität in positiver Weise beeinflussen. Xonotlit wird typischerweise als synthetisch hergestellter Xonotlit eingesetzt, da natürlicher Xonotlit nicht in ausreichenden Mengen zur Verfügung steht und auch nicht zu dem gewünschten Ergebnis führt. Die Herstellung von synthetischem Xonotlit ist beispielsweise beschrieben in der GB-1193172 sowie der EP 0 231 460. Hierzu können diese weiteren Zusätze in einer Menge von mehr als 0 bis zu 30 Gew.-%, bevorzugt zwischen 2 und 20 Gew.-% in dem Wärmedämmkörper enthalten sein.

Es ist ferner besonders bevorzugt, wenn der erfindungsgemäße Wärmedämmkörper weitestgehend frei von organischen Bindemitteln ist. Ganz besonders bevorzugt ist ein Wärmedämmkörper, der durch Verdichten, insbesondere durch Pressen hergestellt ist. Diese Wärmedämmkörper zeichnen sich durch sehr niedrige Wärmeleitzahlen aus, beispielsweise unterhalb von 0,1 W m⁻¹K⁻¹, insbesondere unterhalb von 0,08 W m⁻¹K⁻¹, besitzen also in Bezug auf ihre Dicke eine sehr gute Isolationswirkung. Selbst verhältnismäßig dünne Platten von wenigen Zentimetern Dicke zeigen hervorragende Dämmeigenschaften selbst bei hohen Temperaturen.

Gewünschtenfalls können auch zusätzlich anorganische Bindemittel verwendet werden, wie Wasserglas, Aluminiumphosphate, Boride des Aluminiums, des Titans, des Zirkons, des Calciums, Silicide wie Calciumsilicid und Calcium-Aluminium-Silicid, Borcarbid sowie basische Oxide wie Magnesiumoxid, Calciumoxid und Bariumoxid.

Nach einer weiteren bevorzugten Ausführungsform des erfindungsgemäßen Wärmedämmkörpers ist dieser weitestgehend aus Partikeln mit einem mittleren Teilchendurchmesser von weniger als 300 nm, insbesondere weniger als 100 nm aufgebaut. Der mittlere Teilchendurchmesser kann über übliche Techniken ermittelt werden, beispielsweise über rasterelektronenmikroskopische Methoden. Wärmedämmkörper, die aus diesen Teilchen aufgebaut sind, zeichnen sich einerseits durch eine gute Isolationswirkung aus und lassen sich außerdem alleinig durch Pressen ohne notwendige Zugabe von Bindemitteln und ohne anschließendes Sintern bei hohen Temperaturen herstellen. Durch das erfindungsgemäß vorgesehene Coating können diese Wärmedämmkörper beispielsweise für eine dauerhafte Verklebung vorbehandelt werden.

Ein weiterer Gegenstand der vorliegenden Erfindung ist ein Verfahren zur Oberflächenbehandlung von Kieselsäure- und/ oder Silicat-haltigen Wärmedämmkörpern, bei dem der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält. Hierzu wird das Aluminiumphosphat, beispielsweise Aluminium-dihydrogenphosphat als wässrige Lösung mit pyrogener Kieselsäure gemischt und auf den Wärmedämmkörper aufgesprüht. Danach wird die aufgesprühte Schicht getrocknet und der Vorgang gegebenenfalls nochmals oder auch mehrfach wiederholt. Es sind jedoch auch andere Auftragsverfahren möglich, wie zum Beispiel Anstreichen mit einem Pinsel oder dergleichen.

Eine Weiterbildung des erfindungsgemäßen Verfahrens zur Oberflächenbehandlung sieht vor, dass das Coating eine organische Säure enthält. Dies kann eine einwertige Säure sein, wie beispielsweise Ameisensäure, Essigsäure oder Propionsäure, oder aber auch zwei- oder mehrwertige organische Säure wie Oxalsäure, Weinsäure oder Zitronensäure. Auch Mischungen dieser Säuren sind möglich.

Es ist ebenfalls möglich, dass das Coating eine anorganische Säure enthält. Dies kann insbesondere eine mittelstarke oder schwache Mineralsäure sein, wie beispielsweise Phosphorsäure, Borsäure oder dergleichen. Diese Säuren können einzeln, als Mischung oder auch als Mischung mit einer oder mehreren organischen Säuren eingesetzt werden.

Es kann sich vorteilhaft auf die Lagerstabilität des Coatings auswirken, wenn das Coating als 2-komponentiges System hergestellt und gelagert wird, bei dem die erste Komponente flüssig ist und ein Aluminiumphosphat, ein Lösungsmittel und ggf. eine organische Säure sowie Kieselsäure und/ oder ein Silicat enthält und die zweite Komponente fest ist und Kieselsäure und/ oder ein Silicat enthält, wobei die beiden Komponenten vor dem Gebrauch miteinander vermischt werden. Das Lösungsmittel kann dabei Wasser oder ein organisches Lösungsmittel sein, wie Alkohole, z.B. Ethanol und Propanol, Aceton und dergleichen oder Mischungen von diesen. Dabei enthält die erste Komponente bevorzugt zwischen 40 und 80 Gew.-% Wasser, besonders bevorzugt zwischen 40 und 60 Gew.-%. Die erste Komponente enthält ferner bevorzugt zwischen 20 und 60 Gew.-%, bevorzugt zwischen 30 und 50 Gew.-% Aluminium-dihydrogenphosphat. Es kann beispielsweise eine 50 %ige Aluminiumdihydrogenphosphatlösung in Wasser eingesetzt werden.

Die erste Komponente kann außerdem zwischen 0 und 15 Gew.-%, bevorzugt 0,5 bis 10 Gew.-% an Kieselsäure und/ oder ein Silicat, insbesondere in Form pyrgogener Kieselsäure enthalten.

Die erste Komponente kann ferner noch zwischen 0 und 5 Gew.-% einer organische oder anorganische Säure beinhalten, bevorzugt zwischen 0,1 und 4 Gew.-%, ganz besonders bevorzugt zwischen 0,5 und 3 Gew.-%.

Die zweite Komponente kann eine Mischung aus 50 Gew.-% pyrogener Kieselsäure und 50 Gew.-% expandiertem Vermiculit umfassen. Das Verhältnis der beiden genannten Bestandteile der zweiten Komponente kann 10: 0 bis 0:10 betragen, bevorzugt 9,5:0,5 bis 0,5:9,5.

Bei Einsatz des Coatings als 2-komponentige Mischung hat es sich als vorteilhaft erwiesen, wenn die erste Komponente mit der zweiten Komponente im Verhältnis 10:1 miteinander vermischt wird.

Ein weiterer Gegenstand der vorliegenden Erfindung ist ein Verfahren zum Verkleben eines Kieselsäure- und/ oder Silicat-haltigen Wärmedämmkörpers auf einem Untergrund, bei dem zunächst der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält. Auf diese Coatingschicht wird dann ein Klebstoff aufgebracht und der Wärmedämmkörper auf dem Untergrund aufgeklebt. Hierbei ist es vorteilhaft, wenn zwischen der Beschichtung des Wärmedämmkörpers mit dem Coating dieses vollständig abtrocknet.

Als Kleber werden so genannte temperaturbeständige keramische Kleber, beispielsweise Kleber auf Wasserglasbasis eingesetzt. Keramische Kleber beinhalten neben mineralischen Füllstoffen wie Aluminiumsilicat, Tonerde, Schamotte, Calciumsilicat und Zirconsilicat ein oder mehrere Bindemittel wie Wasserglas, Kieselsol (kolloidale Kieselsäure) oder Ethylsilicat.

Als Untergründe kommen im Prinzip alle denkbaren Untergründe in Betracht, insbesondere Untergründe, wie sie in Gebäuden vorkommen, wie Mauerwerk, Gipskarton, Holz u.ä.. Ein Untergrund im Sinne der vorliegenden Erfindung ist jedoch auch ein anderer Wärmedämmkörper an oder auf dem der erfindungsgemäße Wärmedämmkörper aufgeklebt werden soll. Handelt es sich bei diesem weiteren Wärmedämmkörper ebenfalls um einen kieselsäure- oder Silicathaltigen Wärmedämmkörper, so sollte dieser vorzugsweise ebenfalls in erfindungsgemäßer Weise mit dem Coating beschichtet werden.

Ein weiterer Gegenstand der vorliegenden Erfindung ist der Einsatz des erfindungsgemäßen Verfahrens zum Verkleben von Wärmedämmkörpern zur Herstellung einer Wärmeisolierung.

Ein Gegenstand der vorliegenden Erfindung besteht außerdem in einer Wärmeisolierung, die zumindest einen erfindungsgemäßen Wärmedämmkörper enthält, zur Isolation von Kaminen und Kachelöfen, von Nachtstromspeicher- und Industrieöfen.

Ferner ist die vorliegende Erfindung gerichtet auf die Verwendung einer Mischung, die zumindest ein Aluminiumphosphat mit Kieselsäure und/ oder einem Silicat enthält, als Haftvermittler bei der Verklebung Kieselsäure- und/ oder Silicat-haltiger Wärmedämmkörper.

### Beispiel:

Die vorliegende Erfindung wird nun anhand eines Ausführungsbeispiels genauer erläutert:

Eine gepresste nanoporöse Wärmedämmplatte (Länge = 1000 mm, Breite = 500 mm und Dicke = 40 mm) mit einem Gehalt von 82,5 Gew.-% pyrogener Kieselsäure, 15 Gew.-% Siliciumcarbid und 2,5 Gew.- Calciumoxid soll mit einem Coating als Haftvermittler zur Verbesserung der anschließenden Verklebung mittels eines hochtemperaturbeständigen Klebstoffs beschichtet werden.

Das Coating besteht aus zwei Komponenten, die im Gewichtsverhältnis 10:1 (erste zu zweiter Komponente) zunächst intensiv vermischt werden. Die erste, flüssige Komponente ist eine 30 %ige wässrige Lösung von Al(H₂PO₄)₃ mit einem Gehalt an 5 Gew.-% pyrogener Kieselsäure und 2 Gew.-% Essigsäure. Die zweite, pulverförmige Komponente besteht aus einer Mischung aus 50 Gew.-% pyrogener Kieselsäure und 50 Gew.-% expandiertem Vermiculit.

Die Oberfläche der Wärmedämmplatte wird nun von der Seite, auf die der Klebstoff aufgebracht werden soll mit dieser Mischung eingepinselt. Es werden ebenfalls die Seitenflächen eingepinselt, an denen die Platten später aneinander stoßen und untereinander verklebt werden sollen.

Nach dem Abtrocknen des Coatings werden mehrere, so beschichteter Platten mit einem handelsüblichen Wasserglaskleber, K 84-Kleber der Firma Promat, auf einer Wand aus Gipskartonplatten hinter der Brennkammer eines Kachelofens aufgeklebt und auf diese Weise eine Wärmeisolierung erstellt. Die Platten werden auch an den Stoßfugen, in denen sie auch mit dem Coating beschichtet wurden, mit dem Klebstoff versehen. Der Klebstoff bindet innerhalb von etwa 24 h ab. Danach wird der Ofen in Betrieb genommen. Die Platten sitzen nach mehr als einem Jahr regelmäßiger Ofenbenutzung immer noch vollkommen fest.

## Patentansprüche

1. Wärmedämmkörper, der Kieselsäure und/ oder ein Silicat enthält,
**dadurch gekennzeichnet, dass**
der Wärmedämmkörper zumindest einseitig wenigstens teilweise mit einem Coating beschichtet ist, das eine Mischung aus zumindest einem Aluminiumphosphat mit Kieselsäure und/ oder einem Silicat enthält.

2. Wärmedämmkörper nach Anspruch 1,
**dadurch gekennzeichnet, dass**
das Coating zwischen 20 und 95 Gew.-% an Aluminiumphosphat enthält.

3. Wärmedämmkörper nach Anspruch 1 oder 2,
**dadurch gekennzeichnet, dass**
das Coating zwischen 3 und 80 Gew.-% an Kieselsäure und/ oder Silicat enthält.

4. Wärmedämmkörper nach einem der vorstehenden Ansprüche,
**dadurch gekennzeichnet, dass**
der Wärmedämmkörper und/ oder das Coating Kieselsäure in Form von pyrogener Kieselsäure, Fällungskieselsäure oder Microsilica enthält.

5. Wärmedämmkörper nach einem der vorstehenden Ansprüche,
**dadurch gekennzeichnet, dass**
der Wärmedämmkörper und/ oder das Coating Silicat als Calciumsilicat oder Vermiculit enthält.

6. Wärmedämmkörper nach einem der vorstehenden Ansprüche,
**dadurch gekennzeichnet, dass**
der Wärmedämmkörper einen Gehalt an Kieselsäure und/ oder Silicat von wenigstens 20 Gew.-% aufweist, insbesondere von 25 bis 100 Gew.-%, 30 bis 90 Gew.-%.

7. Wärmedämmkörper nach einem der vorstehenden Ansprüche,
**dadurch gekennzeichnet, dass**
der Wärmedämmkörper Gips, Aluminiumoxid, Magnesiumoxid, Calciumoxid oder Mischungen von diesen enthält.

8. Wärmedämmkörper nach einem der vorstehenden Ansprüche,
**dadurch gekennzeichnet, dass**
der Wärmedämmkörper ein Trübungsmittel enthält, das insbesondere ausgewählt ist aus Siliziumcarbid, Siliciumdioxid, Zirconsilicat, Zirconoxid, Titandioxid, insbesondere als Rutil, Ilmenit, Eisenoxid, insbesondere Eisen (II)/(III)-Mischoxide, Chromdioxid, Mangandioxid, Aluminiumoxid, Ruß oder Mischungen von diesen.

9. Wärmedämmkörper nach Anspruch 8,
**dadurch gekennzeichnet, dass**
der Wärmedämmkörper Trübungsmittel in einer Menge von mehr als 0 bis zu 30 Gew.-% enthält.

10. Wärmedämmkörper nach einem der vorstehenden Ansprüche,
**dadurch gekennzeichnet, dass**
der Wärmedämmkörper Strukturverstärker enthält, die insbesondere ausgewählt sind aus organischen oder anorganischen Fasermaterialien, insbesondere Glasfasern, Keramikfasern und Whiskers sowie Faserschnüren, insbesondere wie sie aus Schmelzen von Aluminium- und/oder Siliciumoxid gewonnen werden, Steinwolle, Basaltfasern, Schlackenwolle, Erdalkalimetallfasern, HT-Glasfasern, Cellulosefasern, Polymerfasern sowie Mischungen von diesen.

11. Wärmedämmkörper nach Anspruch 9,
**dadurch gekennzeichnet, dass**
der Wärmedämmkörper die Strukturverstärker in einer Menge von mehr als 0 bis zu 10 Gew.-% enthält.

12. Wärmedämmkörper nach einem der vorstehenden Ansprüche,
**dadurch gekennzeichnet, dass**
der Wärmedämmkörper weitere Zusätze enthält, die insbesondere ausgewählt sind aus Xonotlit, Perlit und Tonerde.

13. Wärmedämmkörper nach Anspruch 12,
**dadurch gekennzeichnet, dass**
der Wärmedämmkörper die weiteren Zusätze in einer Menge von mehr als 0 bis zu 30 Gew.-% enthält.

14. Wärmedämmkörper nach einem der vorstehenden Ansprüche,
**dadurch gekennzeichnet, dass**
der Wärmedämmkörper weitestgehend frei von organischen Bindemitteln ist.

15. Wärmedämmkörper nach einem der vorstehenden Ansprüche,
**dadurch gekennzeichnet, dass**
der Wärmedämmkörper durch Verdichten, insbesondere durch Pressen hergestellt ist.

16. Wärmedämmkörper nach einem der vorstehenden Ansprüche,
**dadurch gekennzeichnet, dass**
der Wärmedämmkörper weitestgehend aus Partikeln mit einem mittleren Teilchendurchmesser von weniger als 300 nm, insbesondere weniger als 100 nm aufgebaut ist.

17. Verfahren zur Oberflächenbehandlung von Kieselsäure- und/ oder Silicat-haltigen Wärmedämmkörpern, bei dem der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält.

18. Verfahren nach Anspruch 17,
**dadurch gekennzeichnet, dass**
das Coating eine anorganische und/oder organische Säure enthält.

19. Verfahren nach Anspruch 17 oder 18,
**dadurch gekennzeichnet, dass**
das Coating als 2-komponentige Mischung eingesetzt wird, bei der die erste Komponente ein Aluminiumphosphat, ein Lösungsmittel und ggf. eine anorganische und/oder organische Säure sowie Kieselsäure und/ oder ein Silicat enthält und die zweite Komponente Kieselsäure und/ oder ein Silicat enthält, wobei die beiden Komponenten vor dem Gebrauch miteinander vermischt werden.

20. Verfahren nach Anspruch 19,
**dadurch gekennzeichnet, dass**
das Coating als 2-komponentige Mischung eingesetzt wird, wobei die erste Komponente mit der zweiten Komponente im Verhältnis 10:1 miteinander vermischt wird.

21. Verfahren zum Verkleben eines Kieselsäure- und/ oder Silicat-haltigen Wärmedämmkörpers auf einem Untergrund,
• bei dem zunächst der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält;
• auf diese aufgebrachte Coatingschicht ein Klebstoff aufgebracht wird und
• der Wärmedämmkörper auf dem Untergrund aufgeklebt wird.

22. Verfahren nach Anspruch 21 zur Herstellung einer Wärmeisolierung.

23. Wärmeisolierung zur Isolation von Kaminen und Kachelöfen, von Nachtstromspeicher- und Industrieöfen enthaltend zumindest einen Wärmedämmkörper nach einem der Ansprüche 1 bis 16Fehler! **Verweisquelle konnte nicht gefunden werden..**

24. Verwendung einer Mischung, die zumindest ein Aluminiumphosphat sowie Kieselsäure und/ oder ein Silicat enthält als Haftvermittler bei der Verklebung Kieselsäure- und/ oder Silicat-haltiger Wärmedämmkörper.

## Geänderte Patentansprüche

### Geänderte Patentansprüche gemäss Regel 137(2) EPÜ.

**1.** Wärmeisolierung zur Isolation von Kaminen und Kachelöfen, von Nachtstromspeicher- und Industrieöfen enthaltend zumindest einen auf einen Untergrund aufgeklebten Wärmedämmkörper, der Kieselsäure und/ oder ein Silicat enthält, wobei der Wärmedämmkörper zumindest einseitig wenigstens teilweise mit einem Coating beschichtet ist, das eine Mischung aus zumindest einem Aluminiumphosphat mit Kieselsäure und/ oder einem Silicat enthält.

**2.** Wärmeisolierung nach Anspruch 1,
**dadurch gekennzeichnet, dass**
das Coating zwischen 20 und 95 Gew.-% an Aluminiumphosphat enthält.

**3.** Wärmeisolierung nach Anspruch 1 oder 2,
**dadurch gekennzeichnet, dass**
das Coating zwischen 3 und 80 Gew.-% an Kieselsäure und/ oder Silicat enthält.

**4.** Wärmeisolierung nach einem der vorstehenden Ansprüche,
**dadurch gekennzeichnet, dass**
der Wärmedämmkörper und/ oder das Coating Kieselsäure in Form von pyrogener Kieselsäure, Fällungskieselsäure oder Microsilica enthält.

**5.** Wärmeisolierung nach einem der vorstehenden Ansprüche,
**dadurch gekennzeichnet, dass**
der Wärmedämmkörper und/ oder das Coating Silicat als Calciumsilicat oder Vermiculit enthält.

**6.** Wärmeisolierung nach einem der vorstehenden Ansprüche,
**dadurch gekennzeichnet, dass**
der Wärmedämmkörper einen Gehalt an Kieselsäure und/ oder Silicat von wenigstens 20 Gew.-% aufweist, insbesondere von 25 bis 100 Gew.-%, 30 bis 90 Gew.-%.

**7.** Wärmeisolierung nach einem der vorstehenden Ansprüche,
**dadurch gekennzeichnet, dass**
der Wärmedämmkörper Gips, Aluminiumoxid, Magnesiumoxid, Calciumoxid oder Mischungen von diesen enthält.

**8.** Wärmeisolierung nach einem der vorstehenden Ansprüche,
**dadurch gekennzeichnet, dass**
der Wärmedämmkörper ein Trübungsmittel enthält, das insbesondere ausgewählt ist aus Siliziumcarbid, Siliciumdioxid, Zirconsilicat, Zirconoxid, Titandioxid, insbesondere als Rutil, Ilmenit, Eisenoxid, insbesondere Eisen (II)/(III)-Mischoxide, Chromdioxid, Mangandioxid, Aluminiumoxid, Ruß oder Mischungen von diesen.

**9.** Wärmeisolierung nach Anspruch 8,
**dadurch gekennzeichnet, dass**
der Wärmedämmkörper Trübungsmittel in einer Menge von mehr als 0 bis zu 30 Gew.-% enthält.

**10.** Wärmeisolierung nach einem der vorstehenden Ansprüche,
**dadurch gekennzeichnet, dass**
der Wärmedämmkörper Strukturverstärker enthält, die insbesondere ausgewählt sind aus organischen oder anorganischen Fasermaterialien, insbesondere Glasfasern, Keramikfasern und Whiskers sowie Faserschnüren, insbesondere wie sie aus Schmelzen von Aluminium- und/oder Siliciumoxid gewonnen werden, Steinwolle, Basaltfasern, Schlackenwolle, Erdalkalimetallfasern, HT-Glasfasern, Cellulosefasern, Polymerfasern sowie Mischungen von diesen.

**11.** Wärmeisolierung nach Anspruch 9,
**dadurch gekennzeichnet, dass**
der Wärmedämmkörper die Strukturverstärker in einer Menge von mehr als 0 bis zu 10 Gew.-% enthält.

**12.** Wärmeisolierung nach einem der vorstehenden Ansprüche,
**dadurch gekennzeichnet, dass**
der Wärmedämmkörper weitere Zusätze enthält, die insbesondere ausgewählt sind aus Xonotlit, Perlit und Tonerde.

**13.** Wärmeisolierung nach Anspruch 12,
**dadurch gekennzeichnet, dass**
der Wärmedämmkörper die weiteren Zusätze in einer Menge von mehr als 0 bis zu 30 Gew.-% enthält.

**14.** Wärmeisolierung nach einem der vorstehenden Ansprüche,
**dadurch gekennzeichnet, dass**
der Wärmedämmkörper weitestgehend frei von organischen Bindemitteln ist.

**15.** Wärmeisolierung nach einem der vorstehenden Ansprüche,
**dadurch gekennzeichnet, dass**
der Wärmedämmkörper durch Verdichten, insbesondere durch Pressen hergestellt ist.

**16.** Wärmeisolierung nach einem der vorstehenden Ansprüche,
**dadurch gekennzeichnet, dass**
der Wärmedämmkörper weitestgehend aus Partikeln mit einem mittleren Teilchendurchmesser von weniger als 300 nm, insbesondere weniger als 100 nm aufgebaut ist.

**17.** Verfahren zur Oberflächenbehandlung von Kieselsäure- und/ oder Silicat-haltigen Wärmedämmkörpern, bei dem der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält, wobei das Coating als 2-komponentige Mischung eingesetzt wird, bei der die erste Komponente ein Aluminiumphosphat und ein Lösungsmittel und die zweite Komponente Kieselsäure und/ oder ein Silicat enthält und die beiden Komponenten vor dem Gebrauch miteinander vermischt werden.

**18.** Verfahren nach Anspruch 17,
**dadurch gekennzeichnet, dass**
das Coating eine anorganische und/oder organische Säure enthält.

**19.** Verfahren nach Anspruch 17 oder 18,
**dadurch gekennzeichnet, dass**
die erste Komponente zusätzlich eine anorganische und/oder organische Säure sowie Kieselsäure und/ oder ein Silicat enthält.

**20.** Verfahren nach Anspruch 19,
**dadurch gekennzeichnet, dass**
die erste Komponente mit der zweiten Komponente im Verhältnis 10:1 miteinander vermischt wird.

**21.** Verfahren zum Verkleben eines Kieselsäure- und/ oder Silicat-haltigen Wärmedämmkörpers auf einem Untergrund,
• bei dem zunächst der Wärmedämmkörper mit einem Coating zumindest einseitig wenigstens teilweise beschichtet wird, wobei das Coating eine Mischung aus zumindest einem Aluminiumphosphat mit Kieselsäure und/ oder einem Silicat enthält;
• auf diese aufgebrachte Coatingschicht ein Klebstoff aufgebracht wird und
• der Wärmedämmkörper auf dem Untergrund aufgeklebt wird.

**22.** Verwendung des Verfahrens nach Anspruch 21 zur Herstellung einer Wärmeisolierung.

**23.** Verwendung einer Mischung, die zumindest ein Aluminiumphosphat sowie Kieselsäure und/ oder ein Silicat enthält als Haftvermittler bei der Verklebung Kieselsäure- und/ oder Silicat-haltiger Wärmedämmkörper.
